# EUROPEAN PATENT APPLICATION

(11) **EP 4 512 556 A1**
(43) Date of publication of application: **26.02.2025**
(21) Application number: 23382873.0
(22) Date of filing: 25.08.2023
(51) Int. Cl.: B23B 5/28

(54) **A MEASURING DEVICE FOR A RAILWAY WHEEL MACHINING LATHE, RAILWAY WHEEL MACHINING LATHE AND METHOD FOR MEASURING A RAILWAY WHEEL**

(71) Applicant: Danobat S. Coop., 20870 Elgoibar Guipuzcoa (ES)
(72) Inventor: Zabaleta Lopez, Ion, 20870 Gipuzkoa (ES); Berrizbeitia Maiztegui, José Luis, 20870 Gipuzkoa (ES)
(74) Representative: Balder IP Law, S.L.

(57) **Abstract**

The measuring device (3) comprises a measuring head (4) comprising at least one follower wheel (5) connectable to a pushing mechanism (6) that resiliently pushes the follower wheel (5) against a wheel profile of a worn rotating railway wheel (2b). The wheel profile includes a tread portion (2d) and a wheel flange portion (2c). The measuring head (4) is electrically insulated from the pushing mechanism (6) and connected to low-voltage input (21) such that, when the follower wheel (5) contacts any part of the railway wheel (2), a short-circuit is generated. The short-circuit generated is detected by a comparator module designed to generate and send a signal to a CNC of the machine lathe to record the positions of the follower wheel in the moment of the short circuit.

## Description

### TECHNICAL FIELD

The present invention relates to measuring devices for railway wheel machining lathes for maintenance operations for railway locomotive, coach and wagon wheels and wheelsets and to lathes comprising such measuring devices. The invention relates also to methods for measuring a wheel profile of a worn rotating railway.

### STATE OF THE ART

Railways wheels and wheelsets are exposed during their lifetime to heavy wear and tear, as well as to accumulation of rust and solidified dirty grease resulting in damage to, deformations of and incrustations in their running surfaces leading to uneven rolling, increased rolling noise and increased tear of the wheel suspensions, which also affect the vehicle stability, vehicle safety, and passenger comfort. Therefore, periodical machining of worn railway wheels and wheelsets by lathes such as portal lathes and underfloor wheel lathes is carried out to reestablish the required properties of their running surfaces.

Nowadays, CNC (=Computer Numeric Control) lathes using computers and servomechanisms to regulate the rates of movement are used to machine railway wheels and wheelsets for maintenance purposes. The operation of such lathes involves taking measurements of the wheel profile including the shapes of the flange portion and running surface of a rotating worn railway wheel by means of sensor devices and machining the profile by cutting elements to reestablish its desired evenness within pre-established tolerances. In CNC lathes, the servomechanisms for elements such as the sensor devices, fastening mechanisms for holding the railway wheel or wheel-plates, the cutting member, etc. are arranged on a bench and movement of the servomechanisms are computer-controlled.

Known measuring devices used in railway wheel lathes to perform measurements of the running surfaces and flange portions of railway wheels and wheelsets are high precision linear sensor devices and include a measuring head comprising a first part and a second part, the first part being linearly displaceable in relation to the second part. A pushing mechanism is provided to resiliently push the first part of the measuring head against the wheel profile of the rotating railway wheel such that the measuring head is vertically linearly displaceable, relative to the second part, in response to any unevenness and/or deformation of the wheel profile of the railway. Thus, the linear displacement between the first and second part is a measure of the unevenness and/or deformation of the wheel profile. This displacement can be measured for example by means of a numbered ruler.

In the afore described known measuring devices, the pushing mechanism may comprise a pneumatic actuator or a hydraulic actuator to resiliently push the first part of the measuring head against the wheel profile.

One of the problems with this type of device is that when the first part of the measuring head contacts the wheel, the pushing force can cause mechanical deflections of the measuring head beyond the measuring tolerances, which can lead to inaccuracies in the measurement of the wheel profile with regard to the location of unevenness and deformations.

### DESCRIPTION OF THE INVENTION

A first aspect of the invention relates to a new measuring device for a railway wheel machining lathe, which overcomes or at least mitigates the inaccuracies in the measurement of the wheel profile with regard to the location of unevenness and deformation.

A second aspect of the invention relates to a railway wheel machining lathe comprising the aforementioned measuring device.

A third aspect of the invention relates to a method for measuring a wheel profile of a worn rotating railway wheel.

Further aspects of the invention will become apparent to the person skilled person on the grounds of this specification.

The measuring device for a railway wheel machining lathe comprises a measuring head comprising at least one follower wheel connectable to a pushing mechanism that resiliently pushes the follower wheel against a wheel profile of a worn rotating railway wheel, the wheel profile including a tread portion and a wheel flange portion.

According to the invention, the measuring head is electrically insulated from the pushing mechanism and connected to low-voltage input such that, when the follower wheel contacts any part of the railway wheel, a short-circuit is generated. The short-circuit generated is detected by a comparator module designed to generate and send a signal to a CNC of the machine lathe to record the positions of the follower wheel in the moment of the short circuit.

The low-voltage input is preferably a 5V direct current generator.

In some embodiments the pushing mechanism is connectable to a retractable tool holder slide to move the pushing mechanism and measuring head along a first axis (X) which is substantially perpendicular to the axis of the follower wheel, the retractable tool holder slide being arranged on a cross bar of a tool holder table of the machining lathe to horizontally move the tool holder slide along a second axis (Z) which is substantially parallel to said axis of the follower wheel.

The tool holder slide can comprise a shifting mechanism connected to the pushing mechanism by means of a retractable shifting bar to shift the measuring device along said first axis (X).

The retractable tool holder slide, the pushing mechanism and the measuring device are connected to and controlled by the CNC of the machining lathe.

In an embodiment, the measuring head is electrically insulated from the pushing mechanism by means of rigid insulation plate made of non-conductive material, arranged between the measuring head and the pushing mechanism.

In an embodiment of the invention, the pushing mechanism comprises a pneumatic actuator to resiliently push the follower wheel against the wheel profile whereas in another embodiment of the invention the pushing mechanism comprises a hydraulic actuator to resiliently push the follower wheel against the wheel profile.

In an embodiment the follower wheel is designed to be rotate passively about a rotating axis when pushed against and in contact with the wheel profile of a worn rotating railway wheel such that the follower wheel is capable of running on the wheel profile when in contact with the wheel profile, the measuring head being capable of copying the wheel profile through contact recording the X and Z coordinates of the profile.

Preferably, the measuring head comprises two follower wheels arranged at opposite sides of the measuring head, such that both follower wheels rotate passively about said rotating axis.

In one embodiment the measuring head and pushing mechanism are mounted on a retractable module when the measuring device is mounted on a machining lathe, such that the measuring device is retracted during working operations of the machining lathe.

A second aspect of the invention relates to a railway wheel machining lathe comprising a bench, a fastening device to fasten a worn railway wheel to the bench, a drive mechanism connected to the railway wheel to make the railway wheel rotate about a spinning axis, at least one cutting member to machine the wheel profile of the railway wheel, at least one measuring device to take measurements of the profile of the railway wheel, servomechanisms to move each cutting member and each measuring sensor to and from their respective working positions, and a computer to control the servomechanism, each cutting member and each measuring device. The at least one measuring device comprises the features as defined previously in the first aspect of the present invention.

In a third aspect the invention relates to a method for measuring a wheel profile of a worn railway wheel, the wheel profile including a tread portion and a wheel flange portion. The method comprising the steps of
providing a measuring head comprising at least one follower wheel and connected to a pushing mechanism,
insulating electrically the measuring head from the pushing mechanism,
connecting the measuring head to a low-voltage input,
resiliently pushing the follower wheel against the wheel profile of a worn railway wheel such that, when the follower wheel contacts any part of the railway wheel, a short-circuit is generated,
detecting the short-circuit generated by a comparator module designed to generate a send a signal to a CNC of the machine lathe to record the positions of the follower wheel in the moment of the short circuit.

In one embodiment of the method the pushing mechanism is connectable to a retractable tool holder slide to move the pushing mechanism and measuring head along a first axis (X) which is substantially perpendicular to an axis of the follower wheel, the retractable tool holder slide being arranged on a cross bar of a tool holder table of the machining lathe to horizontally move the tool holder slide along a second axis (Z) which is substantially parallel to said axis of the follower wheel.

In one embodiment of the method the measuring head is electrically insulated from the pushing mechanism by means of rigid insulation plate made of non-conductive material, arranged between the measuring head and the pushing mechanism.

In one embodiment of the method the follower wheel is designed to be rotate passively about a rotating axis when pushed against and in contact with the wheel profile of a worn rotating railway wheel such that the follower wheel is capable of running on the wheel profile when in contact with the wheel profile, the measuring head being capable of copying the wheel profile through contact recording the X and Z coordinates of the profile.

In one embodiment of the method the low-voltage input is a 5V direct current generator.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows a front view of an embodiment of a railway wheel machining lathe which is a portal lathe.
Figure 2 shows a partial front perspective view of the portal lathe shown in figure 1 in an operating position,
Figure 3 shows a further enlarged partial front perspective view of the measuring device shown in figure 2.
Figure 4 shows another enlarged partial front perspective view of the measuring device shown in figure 2.
Figure 5 shows a side perspective view of an embodiment of a measuring head according to the present invention.
Figure 6 shows a schematic side view of the measuring device shown in figure 3.
Figure 7 shows a schematic front view of the measuring device shown in figure 3.
Figures 8A to 8T show a sequence of successive measuring positions of the measuring device according to the invention for measuring the thread profile.
Figure 9A shows a schematic view of an electric connection in an open electric circuit integrated in the measuring device.
Figure 9B shows a schematic view of the electricity flow in a closed electric circuit integrated in the measuring device.
Figure 10 shows a schematic view of the comparator module.

These drawings comprise reference signs associated to the following elements:
- 1: machining lathe
- 1a: operator console
- 1b: human operator
- 1c: housing
- 1d: portal
- 1e: wheel support member
- 2: railway wheel set
- 2a: axle
- 2b: railway wheel
- 2c: flange portion
- 2d: tread portion
- 3: measuring device
- 4: measuring head
- 4a: front surface
- 5: follower wheel
- 5a: rotating axis
- 6: pushing mechanism
- 7: tool holder slide
- 7a: retractable shifting bar
- 8: crossbar
- 8a: Protective cover
- 9: insulation plate
- 11: fixation piece
- 12: rotatable cylinder
- 17: touch probe
- 17a: tiltable arm
- 19: driving roller
- 20: wheel rotating mechanism
- 21: electric input
- 22: electric output
- 23: electric path
- 24: comparator module
- 24a: output signal to measuring head
- 24b: return signal to comparator module
- 24c: output signal to CNC
- X: first axis
- Z: second axis

### DESCRIPTION OF WAYS OF CARRYING OUT THE INVENTION

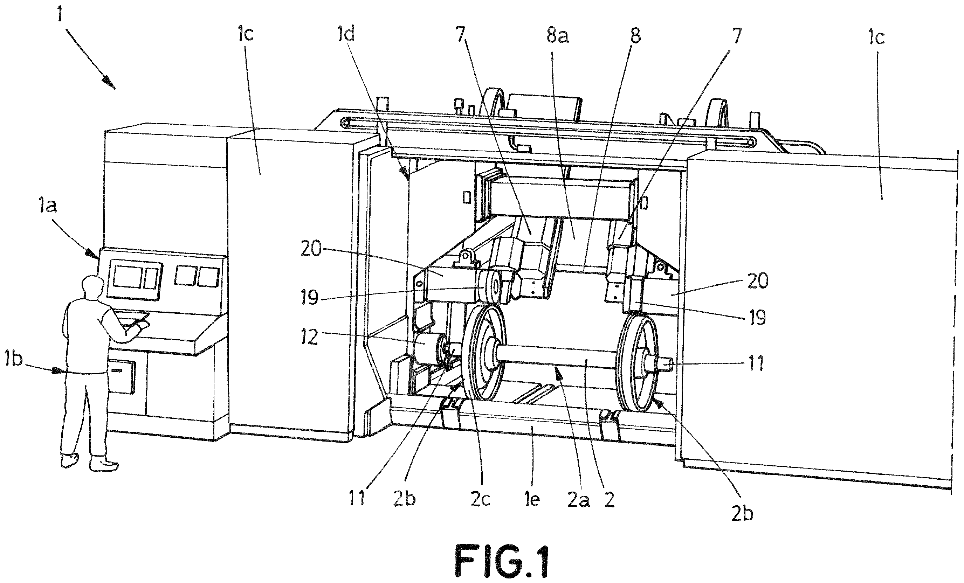

Figure 1 shows a *per* se portal railway machining lathe designed for corrective maintenance of railway wheels and brake disks of worn railway wheel sets (2) which have been dismantled from the railway vehicles in order to regenerate the railway wheel profiles that have been subject to normal wear and deformation caused by the transit of the wheels on the railway tracks. To improve the understanding of figure 1, only the wheels (2b) and axle (2a) of a wheelset (2) of a railway vehicle are shown in figure 1. Each railway wheel (2b) comprises a wheel flange portion (2c) and a running surface (2d).

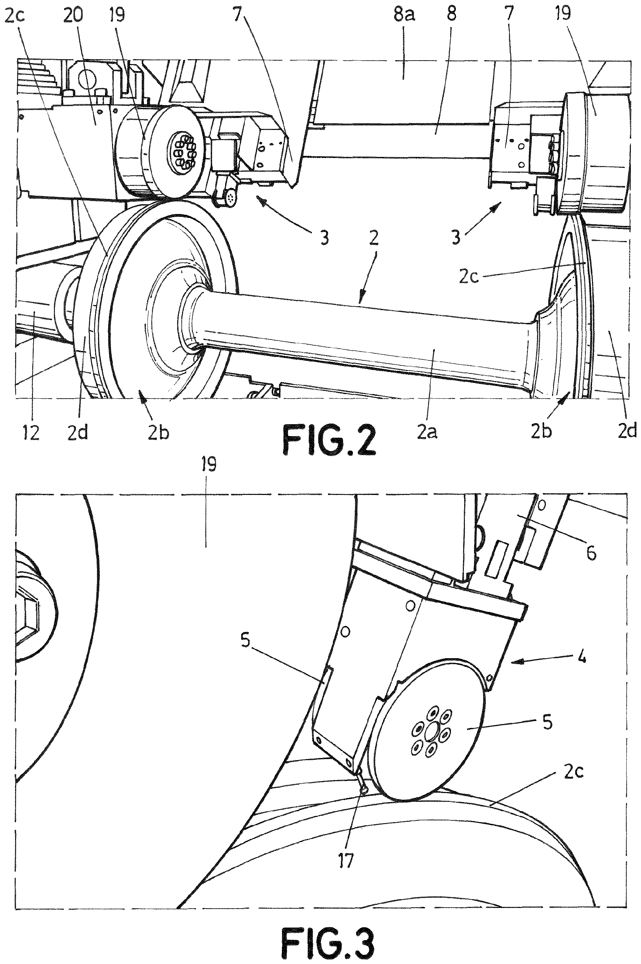

As shown in figure 1, the portal railway machining lathe (1) comprises an operator console (1a) for a human operator (1b). The operator console (1a) is integrated in one side portion of a housing (1c) which protects the operating parts including the toll holder table of the machining lathe (1) and which comprises a central portal (1d) for placing the wheelset (2) for machining. In the working position shown in figure 1, the outer ends of the axle (2a) of the wheelset (2) are fixed to respective cylindrical fixation pieces (11) each of which is in turn fixed to a rotatable cylinder (12) (see also figures 2, 3) mounted to a tool holder table (not shown in the drawings) of the machining lathe (1). In the position shown in figure 1, the wheels (2b) of the railway wheelset (2) rest on a support member (1e). In the position shown in figure 1, the wheel flange portion (2c) of each wheel (2b) is guided in a guide groove provided in the surface of the support member (1e).

Two driving rollers (19), one located at each side of the portal (1d) of the machining lathe (1), and each connected to a wheel rotating mechanism (20) including an electric motor, protrude into the portal (12). The rotating mechanisms (20) are *per se* known and connected to the machining lather (1) in a *per se* conventional manner, so that the driving rollers (19) are able to contact the wheel flange portions (2c) of the respective railway wheels (2a) and transmit a rotating movement to the wheels (2b) of the wheelset (2), after the railway wheels (2b) of the wheelset (2) have been separated from the support member (1e), e.g. by lifting the wheelset (2), or by lowering or withdrawing the support platform (1e). For measuring purposes, rotation of the wheels (2b) is required to establish the lateral references of the wheels (2b), the vertical references of the wheels (2b), and the diameters of the wheels (2b). However, the railway wheels (2b) are kept stationary i.e. without rotating, when measuring the wheel profile.

The machining lathe (1) further also comprises two tool holder slides (7) protruding at respective opposite sides of the portal (1d) and mounted to a cross bar (8). The cross bar (8) is covered by a transversally foldable protective cover (8a) extending between the tool holder slides (7). Two measuring devices (not shown in figure 1), each mounted to one of the tool holder slides (7) also protrude at respective opposite sides of the portal (1d). The cross bar (8), the protective cover (8a), the wheel rotating mechanisms (20), the tool holder slides (7) and the measuring device are operatively connected to the tool holder table.

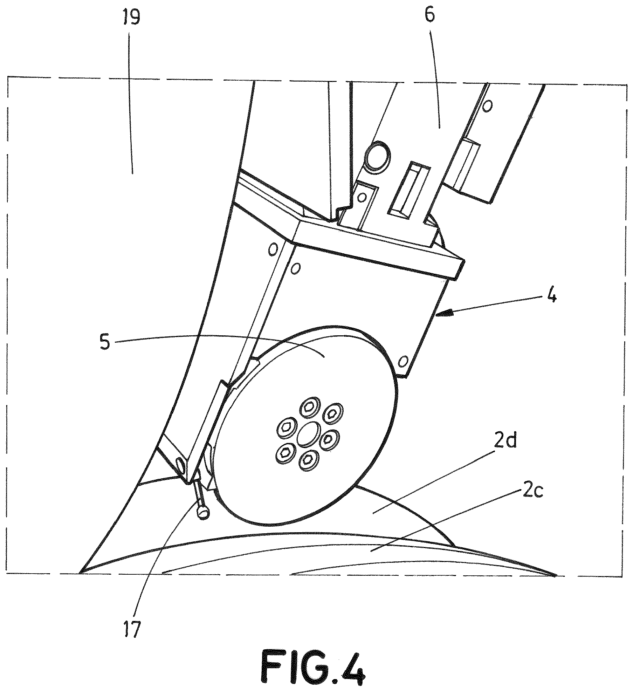

In the working position of the machining lathe (1) shown in figure 2, the measuring devices (3) are extracted downwards to their retracted resting positions and horizontally located in vertical planes which are parallel to the inner sides of the wheel flange portions (2c) of the respective railway wheels (2b) without contacting the wheels flange portions (2c). In the working position of the machining lathe (1) shown in figures 3 and 4, the measuring devices (3) have been horizontally shifted and vertically moved to positions where each is in contact with a tread portion (2d) of a respective railway wheel (2b) as in figure 4 or in contact with a flange portion (2c) of a respective railway wheel (2b) as in figure 3. In figures 2, 3, 5, 6 and 7, the wheels (2b) are kept stationary i.e. without rotating, to measure the wheel profile.

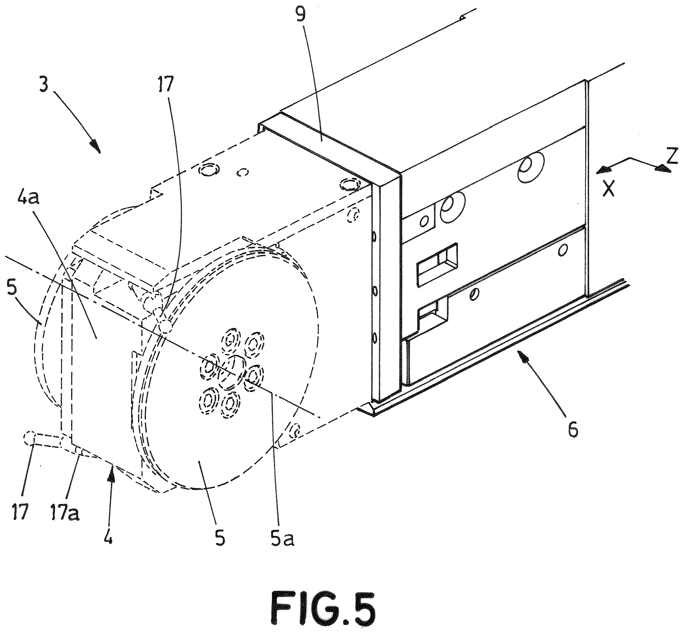

Figure 5 shows an embodiment of a measuring device (3) for use for example with the portal railway wheel machining lathe (1) of figure 1. The measuring device comprises a measuring head (4) and a pushing mechanism (6). The measuring head (4) comprises two follower wheels (5) designed to contact with the respective railway wheels during the measuring operations. The follower wheels (5) can rotate passively about a rotating axis (5a) when pushed against and in contact with a rotating railway wheel during the geometry and diameter measurement. For the measurement of the wheel profile the railway wheel remains stationary and consequently there is no rotation of the follower wheels. The follower wheels (5) slightly protrude beyond the front surface (4a) of the measuring head (4). The follower wheels (5) are sensor equipped and calibrated.

The wheel profile includes a tread portion (2d) and a wheel flange portion (2c) (cf. figure 2). The measuring head (4) is arranged in a displaceable manner in response to any unevenness and/or deformation of the wheel profile of the railway wheel (2b) when the follower wheel (5) pushes onto the wheel profile. The pushing mechanism (6) which may be a pneumatically or hydraulically actuated mechanism, is designed to resiliently push the follower wheel (5) against the wheel profile of the railway wheel (2b) for detecting displacements of the follower wheel (5) which are caused by unevenness and deformations of the wheel profile when the follower wheel (5) is positioned on the wheel profile of the railway wheel (2b).

The follower wheel (5) is capable of running on the wheel profile when in contact with the wheel profile of a rotating railway wheel (2b). In the embodiments shown in the figures of the invention two follower wheels (5) arranged at opposite sides of the measuring head (4) such that both follower wheels (5) rotate passively about said rotating axis (5a). As stated above, rotation of the wheels (2b) is required to establish the lateral references of the wheels (2b), the vertical references of the wheels (2b), and the diameters of the wheels (2b), but not when measuring the wheel profile where the railway wheels (2b) are kept stationary i.e. without rotating. Two touch probes (17) are arranged on opposite sides of the free end portions of the measuring head (4) and can make contact with the wheel to determine the axial position. Each of the touch probes (17) is mounted to a tiltable arm (17a) fixed to the measuring head (4), so that the touch probes (17) may laterally tilt outwards to scan surface of the wheel profile.

The measuring head (4) is electrically insulated from the pushing mechanism (6) by means of rigid insulation plate (9) made of non-conductive material, arranged between the measuring head (4) and the pushing mechanism (6). For example, the insulation plate may be made of a laminate composite fiberboard material such as CELOTEX having the following characteristics:

| | |
|---|---|
| Specific weight | 1.40 kg/dm³ |
| Flexural tension against rupture perpendicular to lamination (20°C) | 100 MPa |
| Bending strength | 120 MPa |
| Strength against compression perpendicular to the layers | 350 MPa |
| Strength against cracking parallel to the layers | 8.8 Mpa |
| Dielectric strength | 2.5 Kv/mm |

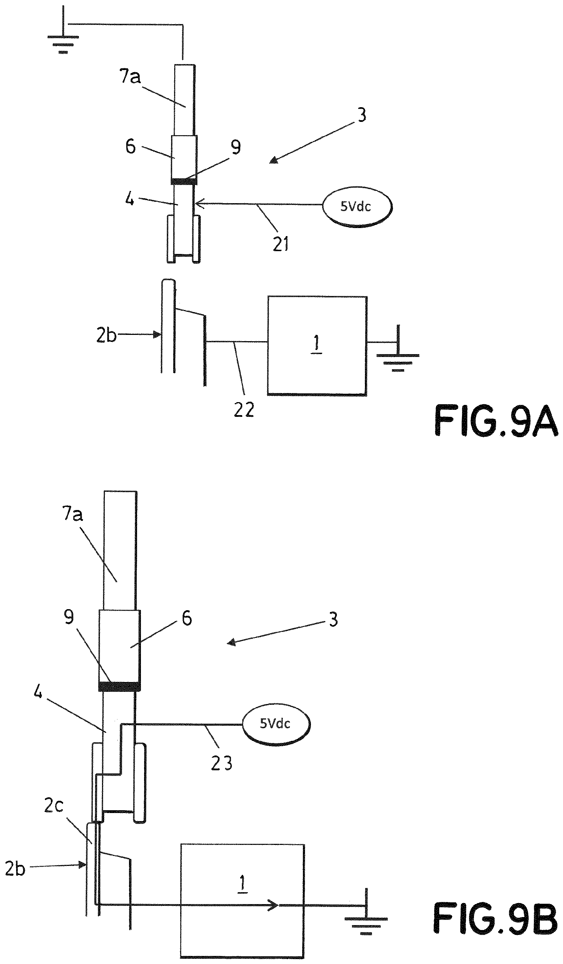

The measuring head (4) is connected by an electric input (21) to an electric source of low voltage, for example a 5V direct current. As shown in figure 9A, when the measuring head (4) does not contact the railway wheel (2b), the voltage does not trespass the measuring head. However, as shown in figure 9B, when the measuring head (4) contacts the railway wheel (2b), such as the wheel flange portions (2c) shown in figures 9A and 9B, an electric path (23) is established between the measuring head (4) and the machining lathe (1) through an electric output (22) as the wheel is in contact with the machining lathe (1) which is grounded. Thus, when the measuring head (4) is in contact with the railway wheel (2b) a short-circuit is generated. The short-circuit is detected by a standard comparator module. A resistor is installed between the voltage set point and the input signal. The comparator module is designed to generate a signal that is treated as a probe signal.

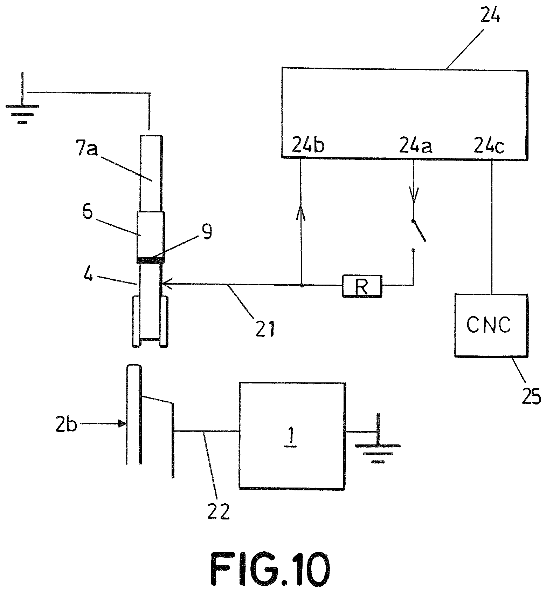

As shown in figure 10, an output (24a) of the comparator module (24) is electrically connected to the measuring head (4) by means of a switch controlled by a relay. A return signal is connected to an input (24b) of the comparator module (24). Thus, when the measurement process is activated, a digital output is activated to open the switch, supplying a voltage of 5VDC to the measuring head (4) through the electric input (21). When the measuring head (4) comes into contact with the railway wheel (2b), as the wheel is in contact with the rest of the machine (to ground), a short circuit is produced which is detected by the comparator module (24), as a voltage drop is produced at input (24b) of the comparator module (24). At this moment the comparator module (24) activates a signal, which is sent to the CNC (25) to register the current position of the tool table (X axis, vertical) and thus of the follower wheel.

Figures 3 and 4 are enlarged partial front perspective views of the measuring device shown in figure 2 showing the left measuring device (3) during respective steps of measuring the wheel profile where the left railway wheel (2b) are kept stationary i.e. without rotating. Only the left railway wheel (2b) is partially shown. Analogous steps are performed by means of the right measuring head (4) with respect to the right railway wheel (2b).

In the step shown in figure 2, the measuring head (4) is located at the right of the wheel flange portion (2c) and in a lower position achieved by extension of the retractable shifting bar (7a) of the pushing mechanism (6). The follower wheels (5) are not in contact the railway wheel (2a) so that there is no electric flow between the measuring head (4) and the machining lathe (1) and thus no measurement is taken.

In the step shown in figure 3, the measuring head (4) has been horizontally shifted and vertically moved into a measuring position where the right follower wheel (5) is in contact with the wheel flange portion (2c) at a pre-established measuring point identified and recorded according to its coordinates on the X/Y axis.

In the step shown in figure 4, the measuring head (4) has been horizontally shifted and vertically moved into a measuring position where the right follower wheel (5) is in contact with a wheel tread portion (2d) at a pre-established measuring point identified and recorded according to its coordinates on the X/Y axis.

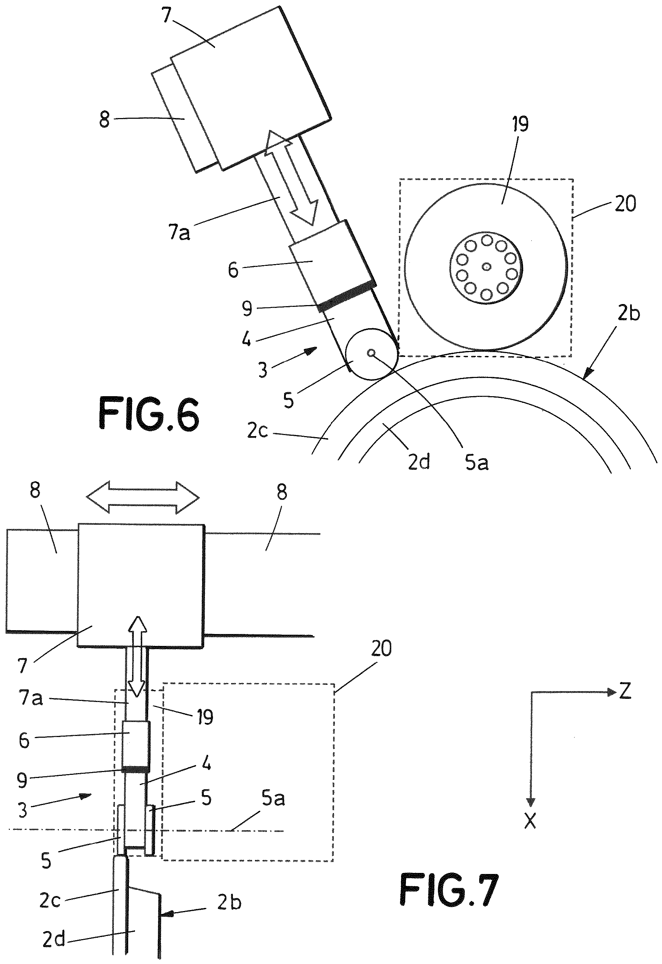

Figures 6 and 7 are schematic partial views of the embodiment of the measuring device (3) referred to in figures 1 to 5 when measuring the wheel profile where the right railway wheel (2b) is kept stationary i.e. without rotating. Only the right railway wheel (2b) is partially shown. In these figures, the follower wheel (5) of the measuring head (4) is in contact with the wheel flange portion (2c) of the right railway wheel (2b).

As apparent, the measuring device (3) is fixed to a retractable shifting bar (7a) of a *per* se conventional tool holder slide (7) which is arranged on a crossbar (8) of a tool holder table (not shown in figures 6, 7) and comprises a measuring head (4) and a pushing mechanism (6). The shifting bar (7a) is mounted to the tool holder slide (7) such that it may move the measuring device (4) towards and away from the surface of the railway wheel (2b) along a first axis (X) which is substantially perpendicular to and above the axis (5a) of the follower wheel (5) as indicated by the vertical double arrows in figures 6 and 7, whilst the tool holder slide (7) may move the measuring device (3) from left to right and vice versa along a second axis (Z) which is substantially parallel to the axis (5a) of the follower wheel (5) as indicated by the horizontal double arrows in figure 7. The measuring device (3) comprises a measuring head (4) and a pushing mechanism (6) which are electrically insulated from each other by means of an insulation plate (9). As stated above, the measuring head (4) is connected by an electric input (21) to an electric source of low voltage.

In the measuring position shown in figures 6 and 7, the wheel flange portion (2c) of the rail wheel (2b) is in contact with the left follower wheel (5) of the measuring head (4) so that, as described with reference to figures 9A and 9B, an electric path (23) is established between the measuring head (4) and the machining lathe (1) through an electric output (22) as the wheel is in contact with the machining lathe (1) and a short-circuit is generated and detected by a standard comparator module which generates a signal that is treated as a feeler signal indicative of the position where the electric contact between the railway wheel (2b) and the follower wheel (5) has been established.

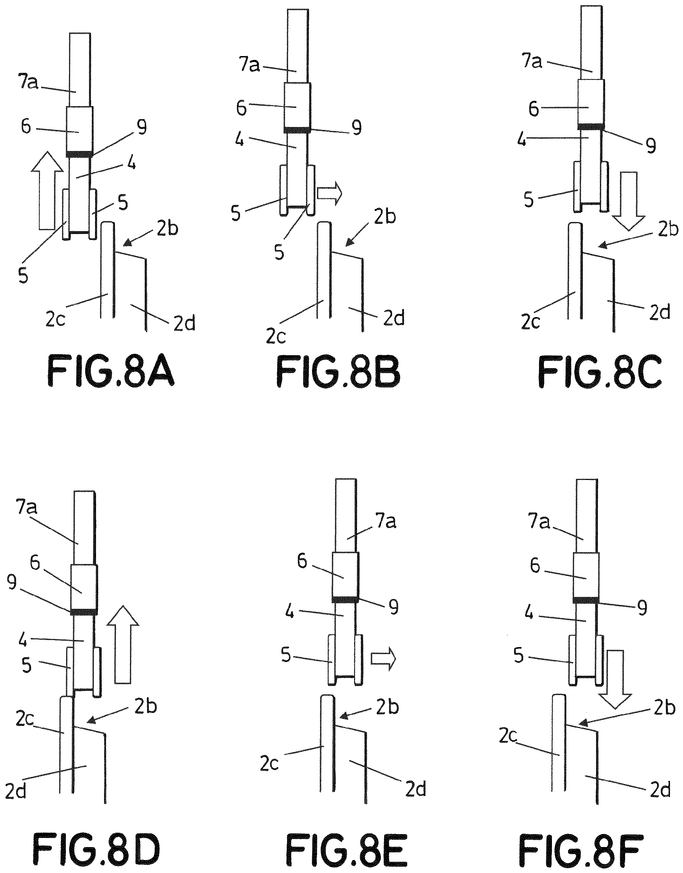

Figures 8A to 8T show a sequence of successive measuring positions of the measuring device according to any of figures 4 and 14 along the first axis (X) and the second axis (Z) where the measuring is positioned at pre-established measuring points identified and recorded each according to its coordinates on the X/Y axis to measure the railway wheel profile. Only selected measuring positions of the measuring device are shown in these figures to make the basic movements of the measuring from one measuring position to another next one more readily understandable. Movement of the measuring device along the first axis (X) is achieved by action of the tool holder slide (7) and the shifting bar (6) respectively, as described herein above.

From the position shown in figure 8A where the measuring head (4) is positioned beside the wheel flange portion (2c) of the railway wheel (2b), the measuring head (4) is moved along the first axis (X) in the direction of the vertical arrow shown in figure 8A towards the position shown in figure 8B.

From the position shown in figure 8B where the measuring head (4) is still separate from the wheel flange portion (2c) of the railway wheel (2b), the measuring head (4) is moved along the second axis (Z) in the direction of the horizontal arrow shown in figure 8B towards the position shown in figure 1C where the measuring device (4) is still separated from the wheel flange portion (2c).

From the position shown in figure 8C where the measuring head (4) is still separate from the wheel flange portion (2c) of the railway wheel (2b), the measuring head (4) is moved along the first axis (X) in the direction of the vertical arrow shown in figure 8C towards the position shown in figure 8D.

From the position shown in figure 8D where the left follower wheel (5) of the measuring head (4) is in contact with the wheel flange portion (2c) of the railway wheel (2b), the measuring head (4) is moved along the first axis (X) in the direction of the vertical arrow shown in figure 8D towards the position shown in figure 8E.

From the position shown in figure 8E where the measuring head (4) is again separate from the wheel flange portion (2c) of the railway wheel (2b), the measuring head (4) is moved along the second axis (Z) in the direction of the horizontal arrow shown in figure 8E towards the position shown in figure 8F.

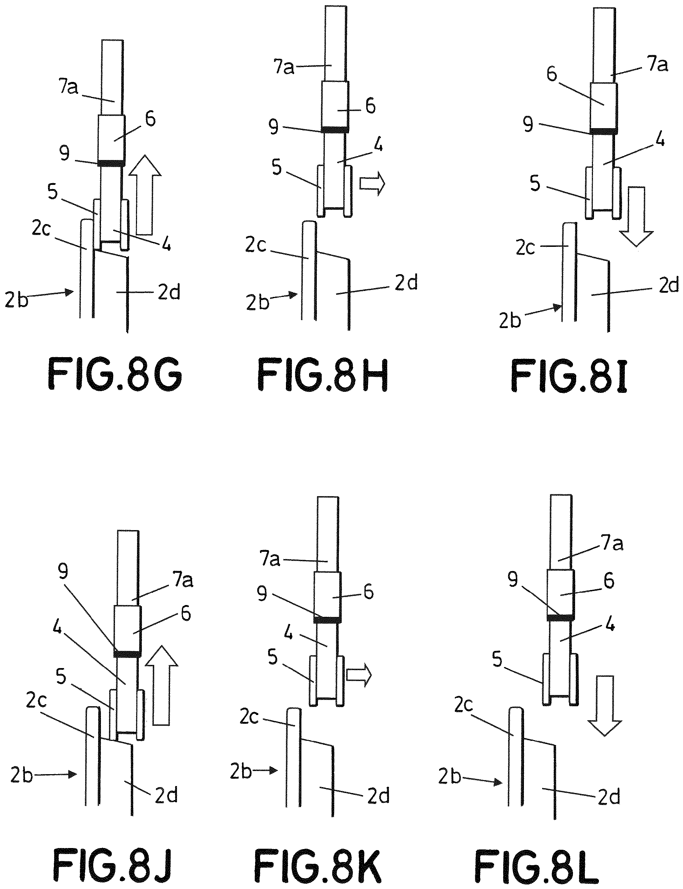

From the position shown in figure 8F where the measuring head (4) is still separate and facing the tread portion (2d) of the railway wheel (2b), the measuring head (4) is moved along the first axis (X) in the direction of the vertical arrow shown in figure 8F towards the position shown in figure 8G.

From the position shown in figure 8G where the left follower wheel (5) of the measuring head (4) is in contact with the tread portion (2d) of the railway wheel (2b), the measuring head (4) is moved along the first axis (X) in the direction of the vertical arrow shown in figure 8G towards the position shown in figure 8H.

From the position shown in figure 8H where the measuring head (4) is again separate from the tread portion (2d) of the railway wheel (2b), the measuring head (4) is moved along the second axis (Z) in the direction of the horizontal arrow shown in figure 8H towards the position shown in figure 8I.

From the position shown in figure 8I where the measuring head (4) is still separate and facing the tread portion (2d) of the railway wheel (2b), the measuring head (4) is moved along the first axis (X) in the direction of the vertical arrow shown in figure 8I towards the position shown in figure 8J.

From the position shown in figure 8J where the left follower wheel (5) of the measuring head (4) is in contact with the tread portion (2d) of the railway wheel (2b), the measuring head (4) is moved along the first axis (X) in the direction of the vertical arrow shown in figure 8J towards the position shown in figure 8K.

From the position shown in figure 8K where the measuring head (4) is again separate from the tread portion (2d) of the railway wheel (2b), the measuring head (4) is moved along the second axis (Z) in the direction of the horizontal arrow shown in figure 8K towards the position shown in figure 8L.

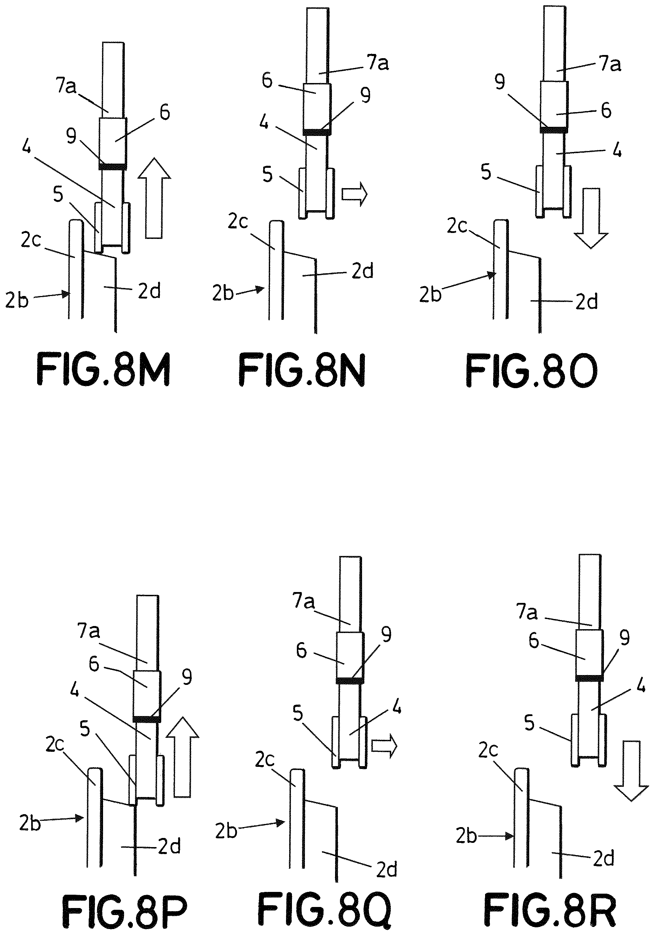

From the position shown in figure 8L where the measuring head (4) is still separate and facing the tread portion (2d) of the railway wheel (2b), the measuring head (4) is moved along the first axis (X) in the direction of the vertical arrow shown in figure 8L towards the position shown in figure 8M.

From the position shown in figure 8M where the left follower wheel (5) of the measuring head (4) is in contact with the tread portion (2d) of the railway wheel (2b), the measuring head (4) is moved along the first axis (X) in the direction of the vertical arrow shown in figure 8M towards the position shown in figure 8N.

From the position shown in figure 8N where the measuring head (4) is again separate from the tread portion (2d) of the railway wheel (2b), the measuring head (4) is moved along the second axis (Z) in the direction of the horizontal arrow shown in figure 8N towards the position shown in figure 8O.

From the position shown in figure 8O where the measuring head (4) is still separate and facing the tread portion (2d) of the railway wheel (2b), the measuring head (4) is moved along the first axis (X) in the direction of the vertical arrow shown in figure 8O towards the position shown in figure 8P.

From the position shown in figure 8P where the left follower wheel (5) of the measuring head (4) is in contact with the tread portion (2d) of the railway wheel (2b), the measuring head (4) is moved along the first axis (X) in the direction of the vertical arrow shown in figure 8P towards the position shown in figure 8Q.

From the position shown in figure 8Q where the measuring head (4) is again separate from the tread portion (2d) of the railway wheel (2b), the measuring head (4) is moved along the second axis (Z) in the direction of the horizontal arrow shown in figure 8Q towards the position shown in figure 8R.

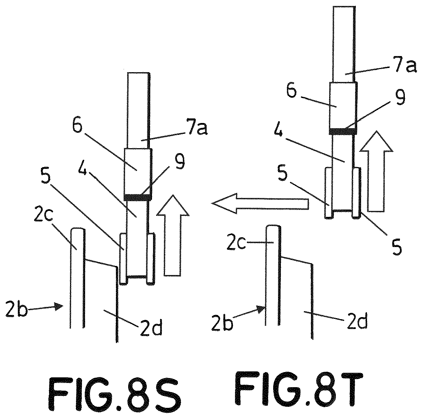

From the position shown in figure 8R where the measuring head (4) is still separate but not anymore facing the tread portion (2d) of the railway wheel (2b), the measuring head (4) is moved along the first axis (X) in the direction of the vertical arrow shown in figure 8R towards the position shown in figure 8S.

From the position shown in figure 8S where the measuring head (4) is also separate and facing a side of the railway wheel (2b), the measuring head (4) is moved along the first axis (X) in the direction of the vertical arrow shown in figure 8S towards the position shown in figure 8T.

From the position shown in figure 8T where the measuring head (4) is also separate from the railway wheel (2b), the measuring head (4) may be further moved along the first axis (X) in the direction of the vertical arrow shown in figure 8T into a retracted position because the measurement process has been completed, or along the second axis (Z) in the direction of the horizontal arrow shown in figure 8T to the position shown in figure 8B to repeat the steps described with reference to figures 8B to 8S, or to carry out the steps described with reference to figures 8B to 8S in a reverse order.

In the afore described positions, measurements of the wheel profile are taken each time the measuring head (4) is in contact with the railway wheel (2) at a measuring point defined on the first axis (X) and the second axis (Z) according to its coordinates on the X/Y axis to measure the railway wheel profile. Intermediate measuring points on the second axis (Z) may be established to provide consecutive contiguous measurements of the wheel profile to enable accurately measuring the tread diameter and obtain the geometry of the wheel profile including the flange portion.

In this text, the terms first, second, etc. have been used herein to describe several devices, elements or parameters, it will be understood that the devices, elements or parameters should not be limited by these terms since the terms are only used to distinguish one device, element or parameter from another. For example, the first axis could as well be named second axis, and the second axis could be named first axis without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

The term "wheel profile" as used herein refers to the running surface and the peripheral surface of the flange portion of a railway wheel.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A measuring device (3) for a railway wheel machining lathe (1), comprising a measuring head (4) comprising at least one follower wheel (5) connectable to a pushing mechanism (6) that resiliently pushes the follower wheel (5) against a wheel profile of a worn rotating railway wheel (2b), the wheel profile including a tread portion (2d) and a wheel flange portion (2c), **characterized in that** the measuring head (4) is electrically insulated from the pushing mechanism (6) and connected to low-voltage input (21) such that, when the follower wheel (5) contacts any part of the railway wheel (2), a short-circuit is generated, the short-circuit generated being detected by a comparator module (24) designed to generate and send a signal to a CNC (25) of the machine lathe to record the positions of the follower wheel (5) in the moment of the short circuit.

2. A measuring device according to claim 1 wherein the pushing mechanism is connectable to a retractable tool holder slide to move the pushing mechanism and measuring head along a first axis (X) which is substantially perpendicular to an axis (5a) of the follower wheel (5), the retractable tool holder slide being arranged on a cross bar of a tool holder table of the machining lathe to horizontally move the tool holder slide along a second axis (Z) which is substantially parallel to said axis (5a) of the follower wheel (5)

3. A measuring device according to claim 1 or 2, wherein the measuring head (4) is electrically insulated from the pushing mechanism (6) by means of rigid insulation plate (9) made of non-conductive material, arranged between the measuring head (4) and the pushing mechanism (6).

4. A measuring device according to claims 1, 2 or 3, wherein the measuring device (3) comprises the pushing mechanism (6) which comprises a pneumatic actuator to resiliently push the follower wheel (5) against the wheel profile.

5. A measuring device according to any of previous claims 1, 2 or 3, wherein the measuring device (3) comprises the pushing mechanism (6) which comprises a hydraulic actuator to resiliently push the follower wheel (5) against the wheel profile.

6. A measuring device (3) according to any one of the preceding claims wherein the follower wheel (5) is designed to be rotate passively about a rotating axis (5a) when pushed against and in contact with the wheel profile of a worn rotating railway wheel (2b) such that the follower wheel (5) is capable of running on the wheel profile when in contact with the wheel profile, the measuring head (4) being capable of copying the wheel profile through contact recording the X and Z coordinates of the profile.

7. A measuring device according to any one of the preceding claims, wherein the measuring head (4) comprises two follower wheels (5) arranged at opposite sides of the measuring head (4) such that both follower wheels (5) rotate passively about said rotating axis (5a).

8. A measuring device according to any one of the preceding claims, wherein the measuring head (4) and pushing mechanism (6) are mounted on a retractable module when the measuring device is mounted on a machining lathe, such that the measuring device is retracted during working operations of the machining lathe.

9. A measuring device according to any one of the preceding claims wherein the low-voltage input is a 5V direct current generator.

10. A railway wheel machining lathe comprising a bench, a fastening device to fasten a worn railway wheel to the bench, a drive mechanism connected to the railway wheel to make the railway wheel rotate about a spinning axis, at least one cutting member to machine the wheel profile of the railway wheel, at least one measuring device to take measurements of the profile of the railway wheel, servomechanisms to move each cutting member and each measuring sensor to and from their respective working positions, and a computer to control the servomechanism, each cutting member and each measuring device, **characterized in that** at least one measuring device comprises the features as defined in any of the preceding claims.

11. Method for measuring a wheel profile of a worn rotating railway wheel (2b), the wheel profile including a tread portion (2d) and a wheel flange portion (2c), the method comprising the steps of
providing a measuring head (4) comprising at least one follower wheel (5) and connected to a pushing mechanism (6),
insulating electrically the measuring head (4) from the pushing mechanism (6),
connecting the measuring head (4) to a low-voltage input (21),
resiliently pushing the follower wheel (5) against the wheel profile of a worn railway wheel (2b) such that, when the follower wheel (5) contacts any part of the railway wheel (2b), a short-circuit is generated,
detecting the short-circuit generated by a comparator module designed to generate a send a signal to a CNC of the machine lathe to record the positions of the follower wheel in the moment of the short circuit.

12. Method according to claim 11 wherein the pushing mechanism is connectable to a retractable tool holder slide to move the pushing mechanism and measuring head along a first axis (X) which is substantially perpendicular to an axis (5a) of the follower wheel (5), the retractable tool holder slide being arranged on a cross bar of a tool holder table of the machining lathe to horizontally move the tool holder slide along a second axis (Z) which is substantially parallel to said axis (5a) of the follower wheel (5)

13. Method according to claims 11 or 12 wherein the measuring head (4) is electrically insulated from the pushing mechanism (6) by means of rigid insulation plate (9) made of non-conductive material, arranged between the measuring head (4) and the pushing mechanism (6).

14. Method according to any of claims 11 to 13 wherein the follower wheel (5) is designed to be rotate passively about a rotating axis (5a) when pushed against and in contact with the wheel profile of a worn rotating railway wheel (2b) such that the follower wheel (5) is capable of running on the wheel profile when in contact with the wheel profile, the measuring head (4) being capable of copying the wheel profile through contact recording the X and Z coordinates of the profile.

15. Method according to any of claims 11 to 14 wherein the low-voltage input is a 5V direct current generator.
